# FASCICULE DE BREVET EUROPEEN

(11) **EP 3 853 819 B1**
(45) Date de publication et mention de la délivrance du brevet: **30.07.2025**
(21) Numéro de dépôt: 19794607.2
(22) Date de dépôt: 19.09.2019
(51) Int. Cl.: G06T 11/00, G06T 19/00

(54) **PROCÉDÉ, MODULE ET SYSTÈME DE PROJECTION SUR UNE PIÈCE D'UNE IMAGE CALCULÉE A PARTIR D'UNE MAQUETTE NUMÉRIQUE**
VERFAHREN, MODUL UND SYSTEM ZUR PROJEKTION EINES AUF DER BASIS EINES DIGITALEN MODELLS BERECHNETEN BILDES AUF EIN WERKSTÜCK
METHOD, MODULE AND SYSTEM FOR PROJECTING ONTO A WORKPIECE AN IMAGE CALCULATED ON THE BASIS OF A DIGITAL MOCKUP

(30) Priorité: 21.09.2018 FR 1858577
(43) Date de publication de la demande: 28.07.2021
(73) Titulaire: Dassault Systèmes, 78140 Vélizy-Villacoublay (FR)
(72) Inventeur: MONTANDON, Christophe, 33170 Gradignan (FR); DELHOMMEAU, Jean-Baptiste, 33320 Eysines (FR)
(74) Mandataire: Atout PI Laplace
(86) Numéro de dépôt international: PCT/FR2019/052197
(87) Numéro de publication internationale: WO 2020/058643

(56) Documents cités:
- "EUROGRAPHICS", 1 January 2001, SPRINGER VERLAG, VIENNA, AT, ISSN: 0946-2767, article RAMESH RASKAR ET AL: "Shader Lamps: Animating Real Objects With Image-Based Illumination", pages: 89 - 102, XP055286121, DOI: 10.1007/978-3-7091-6242-2_9
- RAMESH RASKAR ET AL: "iLamps", ACM SIGGRAPH 2003 PAPERS, ACM US, 2 PENN PLAZA, SUITE 701 NEW YORK NY 10121-0701 USA, 1 July 2003 (2003-07-01), pages 809 - 818, XP058134370, ISBN: 978-1-58113-709-5, DOI: 10.1145/1201775.882349
- DAVID LINDLBAUER ET AL: "Combining Shape-Changing Interfaces and Spatial Augmented Reality Enables Extended Object Appearance", HUMAN FACTORS IN COMPUTING SYSTEMS, ACM, 2 PENN PLAZA, SUITE 701 NEW YORK NY 10121-0701 USA, 7 May 2016 (2016-05-07), pages 791 - 802, XP058257539, ISBN: 978-1-4503-3362-7, DOI: 10.1145/2858036.2858457

## Description

### Domaine de l'invention

La présente invention concerne un système d'affichage visuel d'informations sur des objets réels pour des applications de réalité augmentée dans l'industrie, notamment pour la conception, la fabrication, l'assemblage ou la maintenance de pièces techniques.

Différents systèmes de réalité augmentée sont connus pour étendre la perception de la réalité visuelle avec des informations provenant d'une maquette numérique et plus largement de contenus numériques pouvant être projetés sur la surface de l'objet réel, par exemple des icônes ou des textes désignant les parties de l'objet sur lesquels un opérateur doit intervenir.

Ces solutions de réalité augmentée permettent d'améliorer l'efficacité des étapes de travail manuel dans la fabrication, l'assemblage et la maintenance et, en même temps, la qualité du travail à améliorer. La transmission précise d'informations, par exemple l'état de planification numérique (modèle CAO) directement à une pièce, rend la transmission complexe et sujette à erreur des plans de construction en utilisant des modèles et d'autres instruments de mesure dispensables. Une comparaison de variance visuelle peut être réalisée à tout moment et de manière intuitive pour un utilisateur. De plus, des instructions de travail, par exemple des instructions pas-à-pas, peuvent être mises à disposition directement sur l'objet de travail ou dans le champ de vision de l'utilisateur, c'est-à-dire exactement là où elles sont réellement nécessaires. Des scénarios typiques d'application de l'invention comprennent des systèmes d'assistance d'ouvriers pour afficher des instructions d'assemblage et de maintenance et des informations pour l'assurance qualité. Par exemple, les positions d'assemblage ou les trous de forage peuvent être marqués avec précision ou des points de soudure ou des supports à vérifier peuvent être identifiés. Le système est également adapté pour fournir une assistance au personnel d'entretien sur place par des experts non-résidents qui peuvent contrôler à distance la projection par une caméra intégrée.

Les pièces à usiner doivent être calibrées avec précision, en fonction de la position et de l'orientation du projecteur, de manière à permettre une association entre le référentiel des informations additionnelles, et le référentiel de l'objet réel.

Une solution de recalage des référentiels est basée sur l'utilisation de marqueurs : le système d'affichage visuel d'informations sur des objets réels comprend une unité de projection qui transmet graphiquement une information à un objet et un dispositif de suivi dynamique ayant un système de capteur 3D qui détermine et conserve la position et/ou l'orientation de l'objet et/ou de l'unité de projection dans l'espace. Un dispositif de commande pour l'unité de projection adapte la transmission de l'information à la position actuelle et/ou à l'orientation de l'objet et/ou de l'unité de projection, tel que déterminé par le dispositif de suivi.

La combinaison d'un projecteur avec un dispositif de suivi 3D dynamique permet un étalonnage continu et automatique (référencement dynamique) du projecteur et/ou de l'objet sur lequel une information doit être affichée, par rapport à l'environnement de travail. Il en résulte que l'unité de projection et l'objet peuvent tous deux être déplacés librement puisqu'à chaque mouvement de l'unité de projection ou de l'objet, la transmission graphique et/ou picturale de l'information est automatiquement suivie.

D'autres solutions permettent calculer la localisation de l'objet réel par rapport au point de vue de l'utilisateur pour aligner en permanence les informations numériques avec le monde réel sans l'apposition de marqueurs. La technologie SLAM (Simultaneous localization and mapping), permet d'opérer une reconstruction 3D de l'environnement.

D'autres solutions reposent sur des algorithmes d'apprentissage automatique qui permettent de reconnaître l'objet et de le suivre au fur et à mesure du temps.

### État de la technique

On connaît dans l'état de la technique la demande de brevet internationale WO201591291 qui concerne un procédé d'exécution et de contrôle d'une étape d'usinage sur une pièce en utilisant un système comprenant un projecteur, un dispositif de photogrammétrie ainsi qu'une unité de commande, laquelle connaît la position relative du projecteur et du dispositif de photogrammétrie. Le procédé comprend les étapes suivantes : référencement en vue de déterminer la posture de la pièce par rapport au projecteur et au dispositif de photogrammétrie dans un système de coordonnées prédéfini; projection d'une instruction de travail sur la pièce ; usinage de la pièce par un opérateur; et contrôle de l'usinage par balayage d'au moins une zone partielle de la surface de la pièce. Toutes les étapes sont exécutées par le système sur le même poste de travail dans le cadre d'un processus intégré, à l'exception de l'usinage par l'opérateur.

On connaît aussi la demande de brevet internationale WO200493444 se rapportant à un procédé qui permet d'afficher une image de sortie sur un objet. À cet effet, un groupe de marqueurs uniques est fixé sur l'objet dans des positions prédéterminées. Une image d'entrée de l'objet et des marqueurs est captée par une caméra dans une relation physique fixe par rapport à un projecteur. Une pose du projecteur par rapport aux marqueurs est déterminée à partir de l'image. Puis, une ou plusieurs images de sortie relatives à l'objet peuvent être projetées sur l'objet, en des endroits prédéterminés, en fonction de la pose du projecteur et des marqueurs uniques.

Le brevet français FR3021784 décrit un procédé de projection d'informations issues d'un modèle numérique de conception comprenant les étapes suivantes :
- une étape de calibration comprenant une acquisition de données caractéristiques provenant d'une surface d'intérêt, la comparaison desdites données caractéristiques avec des données numériques issues du modèle numérique de conception, et la détermination d'une position spatiale du dispositif de projection comprenant un vidéoprojecteur et au moins deux dispositifs d'acquisition d'image distincts, et,
- une étape de projection selon ladite position spatiale d'informations issues du modèle de conception numérique au moyen dudit vidéoprojecteur, sur ladite surface d'intérêt.

La demande de brevet internationale WO200332129 décrit un autre exemple de système permettant de visualiser des écarts sur une surface réelle par rapport à une surface nominale, ou dessinée, qui utilisent un système et un procédé qui consistent à cartographier les coordonnées spatiales (par exemple x, y et z) de la surface réelle sur un ordinateur, à comparer la surface réelle cartographiée à la surface nominale afin de réaliser une distribution tridimensionnelle des valeurs d'écart (D), à traiter cette distribution en motif topographique de contours ou zones multiples, chaque contour ou zone présentant la même, ou généralement la même, valeur d'écart (D), et à projeter optiquement ce motif topographique sur la surface réelle en concordance avec la cartographie initiale de la surface afin de produire un affichage des écarts superficiels (D) directement sur la surface réelle. Ces écarts sont mesurés suivant une orientation D perpendiculaire à la surface réelle, ce qui permet de donner la distribution tridimensionnelle en coordonnées x, y, D. La projection optique est, de préférence, une projection laser. La cartographie et la projection sur la surface réelle sont effectuées et coordonnées par rapport à trois points de référence sur ladite surface.

La demande de brevet américain US20160358382 décrit un exemple de procédé pour la réalité augmentée en temps réel utilisant des techniques de projection 3D, le procédé comprenant :
- capturer, par un capteur 3D couplé à un dispositif informatique, un ou plusieurs balayages d'un objet physique dans une scène ;
- générer, par le dispositif informatique, un ou plusieurs modèles 3D de l'objet physique sur la base du ou des balayages ;
- déterminer, par le dispositif informatique, une pose du ou des modèles 3D par rapport à un projecteur sur la scène ;
- prédisposer, par le dispositif informatique, d'un contenu d'image basé sur la pose du ou des modèles 3D pour générer une carte d'image rendue et un résultat d'étalonnage ; et
- superposer, par un projecteur couplé au dispositif informatique, la carte d'image rendue sur l'objet physique dans la scène en utilisant le résultat d'étalonnage.

La demande de brevet américaine US20170054954 décrit un système pour afficher visuellement des informations sur des objets réels, comprenant :
- une unité de projection comprenant au moins un projecteur qui transmet graphiquement ou visuellement une information à un objet, l'information comprenant au moins des informations provenant des plans de construction de l'objet ;
- un dispositif de suivi dynamique ayant un système de capteur 3D comprenant au moins une caméra, dans lequel le dispositif de suivi dynamique détermine et garde une trace et/ou une orientation de l'objet et/ou de l'unité de projection dans l'espace ;
- une pluralité de marqueurs agencés aux points de référence d'un environnement dans lequel le système est employé, et dans lequel les marqueurs sont adaptés pour être détectés par le système de capteur 3D du dispositif de suivi dynamique ; et
dans lequel l'unité de projection est commandée pour adapter une transmission de l'information à une position et/ou une orientation courante de l'objet et/ou de l'unité de projection déterminée par le dispositif de suivi dynamique, et dans lequel le dispositif de suivi dynamique est conçu pour une détection continue de la position et/ou de l'orientation de l'objet et/ou de l'unité de projection en temps réel de sorte que sur la base de la transmission de l'unité de projection, toute divergence avec les plans de construction peut être identifiée par un travailleur.

Le document Ramesh Raskar ET AL, "Shader Lamps: Animating Real Objects With Image-Based Illumination", in EUROGRAPHICS, 2001, pages 89-102, décrit un procédé de projection sur une pièce réelle d'une image calculée à partir d'une maquette numérique enregistrée sur un serveur d'informations numériques associée à ladite pièce réelle pour la visualisation de ladite pièce en réalité augmentée, comprenant le recalage en temps réel du repère associé à la maquette numérique avec le repère du système de capture vidéo et le repère de la pièce réelle, et il comporte une étape de retraitement de l'image calculée en fonction de la topologie de la maquette numérique et de l'orientation du moyen de projection.

### Inconvénients de l'art antérieur

Les solutions de l'art antérieur ne sont pas totalement satisfaisantes, car dans certaines situations, la projection des informations de réalité augmentées perturbe l'opérateur. Par exemple, lorsque la pièce réelle présente des cavités traversantes et que le projecteur est dans l'axe d'une telle cavité, le faisceau peut éblouir l'opérateur lorsqu'il intervient sur le côté de la pièce opposé au projecteur.

De même, lorsque la projection se fait sur des parties courbes de la pièce sur laquelle l'image de réalité augmentée est projetée ou décalée par rapport à un plan de référence normal par rapport à l'axe de projection, les informations sont inexploitables en raison de la déformation ou du flou qui en résulte.

### Solution apportée par l'invention

L'invention vise à remédier à ces inconvénients en proposant une autoadaptation de la projection en fonction de la topologie et de la position de la pièce par rapport au projecteur.

À cet effet, il est proposé, selon un premier aspect de l'invention, un procédé de projection d'une image calculée à partir d'une maquette numérique enregistrée sur un serveur sur une pièce réelle associée à ladite maquette numérique pour la visualisation de ladite pièce en réalité augmentée, comprenant les étapes suivantes :
- capture par une caméra de l'image de la pièce réelle,
- recalage en temps réel du repère associé à ladite maquette numérique avec le repère du système de capture vidéo et le repère de la pièce réelle.

Selon le premier aspect de l'invention, le procédé comporte une étape de retraitement de l'image calculée en fonction de la topologie de la maquette numérique et en fonction de l'orientation du moyen de projection par rapport à la pièce réelle.

L'étape de retraitement peut comporter une détection d'une zone traversante de l'objet réel à partir de la topologie de la maquette numérique et à partir de l'orientation du moyen de projection par rapport à la pièce réelle et, peut comporter une atténuation de l'intensité lumineuse des zones de ladite image calculée correspondant à la zone traversante ainsi détectée.

Avantageusement, l'étape de retraitement comporte une détection d'une zone de la maquette numérique décalée en profondeur par rapport à un plan de référence perpendiculaire à l'axe passant par le point focal du projecteur et le barycentre de la pièce réelle, et peut comporter une modification de l'image calculée dans les parties qui correspondent à la zone.

Selon une possibilité, la modification peut comporter une occultation dans l'image calculée d'informations numériques additionnelles.

La modification comporte une correction numérique pour compenser le décalage entre la surface de projection et ledit plan de référence aux pixels desdites zones.

La correction comporte une production d'une matrice d'erreur, constituée par la différence entre une matrice calculée à partir de l'image acquise à partir de la pièce réelle et une matrice de référence correspondant à la topologie de la maquette numérique repositionnée dans le même référentiel, puis une production d'un critère d'erreur et une modification des cellules de la matrice de référence de l'image à projeter en cours d'adaptation, de façon à minimiser la matrice d'erreur et/ou une mesure scalaire de celle-ci.

Selon un deuxième aspect de l'invention, il est proposé un dispositif de projection d'une image calculée à partir d'une maquette numérique enregistrée sur un serveur sur une pièce réelle associée à ladite maquette numérique pour la visualisation de ladite pièce en réalité augmentée, comprenant :
- un module de capture d'une image de la pièce réelle,
- un module de recalage configuré pour recaler en temps réel un repère associé à ladite maquette numérique avec un repère du système de capture vidéo et un repère de la pièce réelle.

Selon l'invention, le dispositif de projet comporte un module de retraitement configuré pour retraiter ladite image calculée en fonction de la topologie de ladite maquette numérique et en fonction de l'orientation du moyen de projection par rapport à ladite pièce réelle.

Le module de retraitement est en outre configuré pour comporter une détection d'une zone de la maquette numérique décalée en profondeur par rapport à un plan de référence perpendiculaire à l'axe passant par le point focal du projecteur et le barycentre de la pièce réelle, et une modification de l'image calculée dans les parties correspondant à ladite zone,
dans lequel la modification comporte une correction numérique pour compenser le décalage entre la surface de projection et ledit plan de référence aux pixels desdites zones,
dans lequel la correction comporte une production d'une matrice d'erreur, constituée par la différence entre une matrice calculée à partir de l'image acquise à partir de la pièce réelle et une matrice de référence correspondant à la topologie de la maquette numérique repositionnée dans le même référentiel, puis une production d'un critère d'erreur et une modification des cellules de la matrice de référence de l'image à projeter en cours d'adaptation, de façon à minimiser la matrice d'erreur et/ou une mesure scalaire de celle-ci.

Les différents modules peuvent être implémentés sous forme électronique, sous forme de logiciel, ou encore, par exemple, sous forme de FPGA.

Selon un troisième aspect de l'invention, il est proposé un système de projection comportant :
- une caméra,
- un serveur d'informations numériques comportant une maquette numérique,
- une pièce réelle associée à la maquette numérique,
- un dispositif de projection selon le deuxième aspect de l'invention, ou l'un ou plusieurs de ses perfectionnements.

Selon une possibilité, le module de retraitement est configuré pour mettre en œuvre l'étape de retraitement selon le premier aspect de l'invention, ou l'un ou plusieurs de ses perfectionnements.

Selon un quatrième aspect de l'invention, il est proposé un produit programme d'ordinateur, chargeable directement dans la mémoire interne d'un ordinateur, comprenant des portions de code de logiciel pour l'exécution des étapes du procédé selon l'une des revendications précédentes, lorsque ledit programme est exécuté sur un ordinateur.

### Présentation des figures

D'autres données, caractéristiques et avantages de la présente invention apparaîtront à la lecture de la description de mises en œuvre et de modes de réalisation nullement limitatifs, au regard de dessins annexés sur lesquels :
- la figure 1 illustre un mode de réalisation d'un système selon l'invention,
- la figure 2 illustre une première situation de mise en œuvre d'un procédé selon un premier mode de réalisation d'un procédé selon l'invention,
- la figure 3 illustre une deuxième situation de mise en œuvre d'un procédé selon un deuxième mode de réalisation d'un procédé selon l'invention.

### Description des modes de réalisation

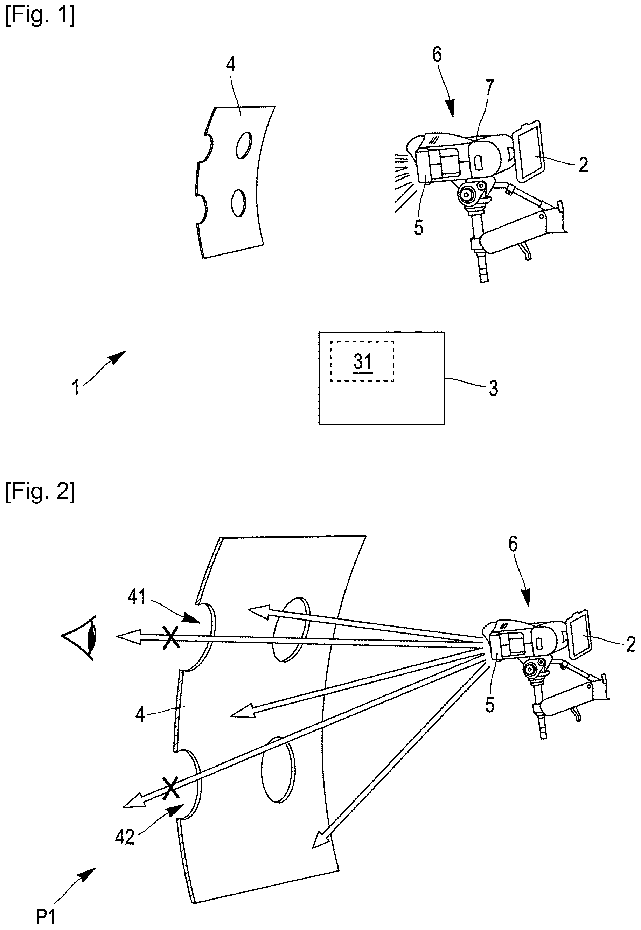

La figure 1 illustre un premier mode de réalisation d'un système de projection 1 selon l'invention.

Le système de projection 1 comporte :
- une caméra 2,
- un serveur d'informations numériques 3 comportant une maquette numérique 31,
- une pièce réelle 4 associée à la maquette numérique 31,
- un module de projection 5 selon un mode de réalisation d'un module de projection selon l'invention.

Selon l'exemple illustré par la figure 1, la caméra 2 et le module de projection 5 sont intégrés au sein d'un même dispositif 6.

Le module de projection 5 est configuré pour projeter une image sur la pièce réelle 4.

L'image projetée est calculée à partir de la maquette numérique 31 enregistrée sur le serveur d'information numérique 3.

Aussi, selon le mode de réalisation illustré par la figure 1, le module de projection 5 comporte :
- un module de capture d'une image de la pièce réelle, ici constitué par la caméra 2,
- une unité de calcul 7.

L'unité de calcul 7 est configurée pour recaler en temps réel un repère associé à la maquette numérique 31 avec un repère du module de capture 2 et un repère de la pièce réelle 4.

L'unité de calcul 7 est en outre configurée pour retraiter l'image calculée en fonction de la topologie de la maquette numérique 31 et en fonction de l'orientation du moyen de projection 5 par rapport à la pièce réelle 4.

La figure 2 illustre une situation de mise en œuvre d'un premier mode de réalisation d'un procédé P1 selon l'invention.

Le procédé P1 comporte :
- une étape de capture par la caméra 2 de l'image de la pièce réelle 4,
- une étape de recalage en temps réel du repère associé à la maquette numérique 31 avec le repère de la caméra 2 et le repère de la pièce réelle 4,
- une étape de retraitement de l'image calculée en fonction de la topologie de la maquette numérique 31 et en fonction de l'orientation du moyen de projection par rapport à la pièce réelle 4.

Comme cela est illustré par la figure 2, l'étape de retraitement du procédé P1 comporte en outre :
- une détection de deux zones traversantes 41 et 42 de l'objet réel 4, à partir de la topologie de la maquette numérique 31 et de l'orientation du module de projection 5 par rapport à ladite pièce réelle et,
- une atténuation de l'intensité lumineuse des zones de ladite image calculée correspondant aux deux zones traversantes 41 et 42 ainsi détectées.

Aussi, cela permet d'éviter d'éblouir un œil d'un utilisateur qui recevrait un rayon projeté à travers la zone correspondante et provenant de la projection de l'image retraitée par le module de projection 5.

Il est proposé un procédé P2, selon un deuxième mode de réalisation d'un procédé selon l'invention, uniquement décrit pour ses différences avec le procédé P1.

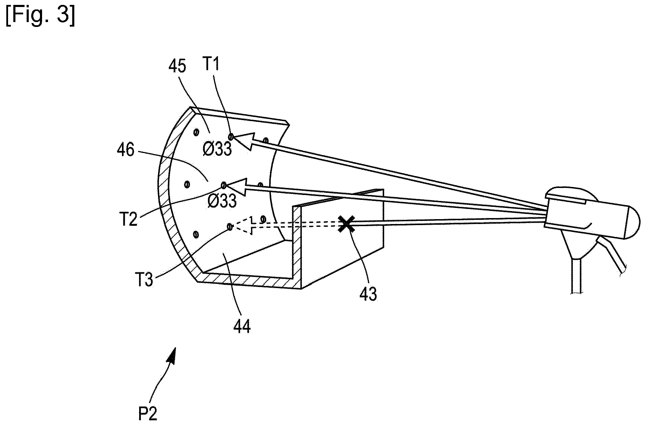

La figure 3 illustre une situation de mise en œuvre du deuxième mode de réalisation.

L'étape de retraitement du procédé P2 comporte :
- une détection d'une zone de la maquette numérique 31 décalée en profondeur par rapport à un plan de référence perpendiculaire à l'axe passant par le point focal du projecteur et le barycentre de la pièce réelle,
- et une modification de l'image calculée dans les parties correspondant à ladite zone.

La zone de la pièce réelle 4 correspondant à la zone de la maquette numérique 31 décalée en profondeur est référencée sur la figure avec le numéro 43.

Le plan de référence perpendiculaire à l'axe passant par le point focal du projecteur et le barycentre de la pièce réelle est référencé sur la figure avec le numéro 44.

L'image calculée peut comporter des informations numériques additionnelles 45 et 46, par exemple pour indiquer un diamètre des deux trous supérieurs T1, T2 représentés sur la figure.

L'image calculée peut également comporter des informations numériques additionnelles correspondant au diamètre du trou inférieur représenté sur la figure T3.

Toutefois, dans l'exemple représenté sur la figure, sur détection du décalage entre la zone de la maquette numérique 31 et du plan de référence, l'image calculée est modifiée par une occultation dans l'image calculée des informations numériques additionnelles correspondant au trou T3.

Selon une première variante du procédé P2, uniquement décrit pour ses différences avec ce dernier, la modification pourrait comporter une correction numérique pour compenser le décalage entre la surface de projection et le plan de référence.

Selon une deuxième variante du procédé P2, uniquement décrit pour ses différences avec le procédé P2, et éventuellement combinable avec la première variante, l'étape de correction comporte une production d'une matrice d'erreur, constituée par la différence entre une matrice calculée à partir de l'image acquise à partir de la pièce réelle et une matrice de référence correspondant à la topologie de la maquette numérique repositionnée dans le même référentiel, puis une production d'un critère d'erreur et une modification des cellules de la matrice de référence de l'image à projeter en cours d'adaptation, de façon à minimiser la matrice d'erreur et/ou une mesure scalaire de celle-ci.

## Revendications

1. Procédé (P1, P2) mise en œuvre par ordinateur de projection sur une pièce réelle (4) d'une image calculée à partir d'une maquette numérique (31) enregistrée sur un serveur d'informations numériques (3) associée à ladite pièce réelle, pour la visualisation de ladite pièce en réalité augmentée, comprenant les étapes suivantes :
- capture par une caméra de l'image de la pièce réelle,
- recalage en temps réel du repère associé à ladite maquette numérique avec le repère du système de capture vidéo et le repère de la pièce réelle,
**caractérisé en ce qu'**il comporte une étape de retraitement de ladite image calculée en fonction de la topologie de ladite maquette numérique et en fonction de l'orientation du moyen de projection par rapport à ladite pièce réelle,
dans lequel l'étape de retraitement comporte une détection d'une zone de la maquette numérique (31) décalée en profondeur par rapport à un plan (44) de référence perpendiculaire à l'axe passant par le point focal du projecteur et le barycentre de la pièce réelle (4), et une modification de l'image calculée dans les parties correspondant à ladite zone,
dans lequel la modification comporte une correction numérique pour compenser le décalage entre la surface de projection et ledit plan de référence aux pixels desdites zones,
dans lequel la correction comporte une production d'une matrice d'erreur, constituée par la différence entre une matrice calculée à partir de l'image acquise à partir de la pièce réelle et une matrice de référence correspondant à la topologie de la maquette numérique repositionnée dans le même référentiel, puis une production d'un critère d'erreur et une modification des cellules de la matrice de référence de l'image à projeter en cours d'adaptation, de façon à minimiser la matrice d'erreur et/ou une mesure scalaire de celle-ci.

2. Procédé (P1) de projection selon la revendication précédente, dans lequel l'étape de retraitement comporte une détection d'une zone traversante (41, 42) de l'objet réel (4) à partir de la topologie de la maquette numérique (31) et de l'orientation d'un moyen de projection (5) par rapport à ladite pièce réelle et, une atténuation de l'intensité lumineuse des zones de ladite image calculée correspondant à la zone traversante ainsi détectée.

3. Procédé (P2) de projection selon la revendication précédente, dans lequel la modification comporte une occultation dans l'image calculée d'informations numériques additionnelles.

4. Dispositif de projection (5) sur une pièce réelle (4) d'une image calculée à partir d'une maquette numérique (31) enregistrée sur un serveur d'information numérique (3) et associée à ladite pièce réelle, pour la visualisation de ladite pièce réelle en réalité augmentée, comprenant :
- un module de capture (2) d'une image de la pièce réelle,
- un module de recalage configuré pour recaler en temps réel un repère associé à ladite maquette numérique avec un repère du module de capture et un repère de la pièce réelle,
**caractérisé en ce qu'**il comporte un module de retraitement configuré pour retraiter ladite image calculée en fonction de la topologie de ladite maquette numérique et en fonction de l'orientation du moyen de projection par rapport à ladite pièce réelle,
le module de retraitement étant en outre configuré pour comporter une détection d'une zone de la maquette numérique (31) décalée en profondeur par rapport à un plan (44) de référence perpendiculaire à l'axe passant par le point focal du projecteur et le barycentre de la pièce réelle (4), et une modification de l'image calculée dans les parties correspondant à ladite zone,
dans lequel la modification comporte une correction numérique pour compenser le décalage entre la surface de projection et ledit plan de référence aux pixels desdites zones,
dans lequel la correction comporte une production d'une matrice d'erreur, constituée par la différence entre une matrice calculée à partir de l'image acquise à partir de la pièce réelle et une matrice de référence correspondant à la topologie de la maquette numérique repositionnée dans le même référentiel, puis une production d'un critère d'erreur et une modification des cellules de la matrice de référence de l'image à projeter en cours d'adaptation, de façon à minimiser la matrice d'erreur et/ou une mesure scalaire de celle-ci.

5. Système (1) de projection comportant :
- une caméra (2),
- un serveur d'informations numériques (3) comportant une maquette numérique (31),
- une pièce réelle (4) associée à la maquette numérique,
- un dispositif de projection (5) selon la revendication précédente.

6. Système de projection (1) selon l'une quelconque des revendications précédentes de système, dans lequel le module de retraitement est configuré pour mettre en œuvre l'étape de retraitement selon l'une quelconque des revendications précédentes de procédé de projection.

7. Produit programme d'ordinateur, chargeable directement dans la mémoire interne d'un ordinateur, comprenant des portions de code de logiciel pour l'exécution des étapes du procédé selon l'une des revendications précédentes, lorsque ledit programme est exécuté sur un ordinateur.

## Patentansprüche

1. Computerimplementiertes Verfahren (P1, P2) zum Projizieren, auf ein reelles Stück (4), eines Bildes, das anhand eines digitalen Modells (31) berechnet wurde, das auf einem Server (3) für digitale Informationen gespeichert ist, das dem reellen Stück zugeordnet ist, zum Darstellen des Stücks in erweiterter Realität, umfassend die folgenden Schritte:
- Erfassen des Bilds des reellen Stücks durch eine Kamera,
- Korrigieren, in Echtzeit, des dem digitalen Modell zugeordneten Bezugspunkts mit dem Bezugspunkt des Videoerfassungssystems und dem Bezugspunkt des reellen Stücks,
**dadurch gekennzeichnet, dass** es einen Schritt des Wiederverarbeitens des berechneten Bilds in Abhängigkeit der Topologie des digitalen Modells und in Abhängigkeit der Ausrichtung des Projektionsmittels in Bezug auf das reelle Stück aufweist,
wobei der Schritt des Wiederverarbeitens ein Erkennen einer Zone des digitalen Modells (31), die in die Tiefe in Bezug auf eine Bezugsebene (44) senkrecht zu der Achse versetzt ist, die durch den Brennpunkt des Projektors und das Baryzentrum des reellen Stücks (4) hindurchgeht, und ein Modifizieren des berechneten Bilds in den der Zone entsprechenden Teilen aufweist,
wobei das Modifizieren ein digitales Korrigieren zum Ausgleichen des Versatzes zwischen der Projektionsfläche und der Bezugsebene zu den Pixeln der Zonen aufweist,
wobei das Korrigieren ein Erzeugen einer Fehlermatrix, die durch die Differenz zwischen einer Matrix, die anhand des Bilds, das anhand des reellen Stücks erlangt wurde, berechnet wird, und einer Bezugsmatrix gebildet wird, die der Topologie des digitalen Modells entspricht, das im gleichen Bezugssystem neu positioniert wurde, dann ein Erzeugen eines Fehlerkriteriums und eine Modifikation der Zellen der Bezugsmatrix des zu projizierenden Bildes bei der Anpassung aufweist, um die Fehlermatrix und/oder ein Skalarmaß von dieser zu minimieren.

2. Verfahren (P1) zum Projizieren nach dem vorhergehenden Anspruch, wobei der Schritt des Wiederverarbeitens ein Erkennen einer Durchgangszone (41, 42) des reellen Objekts (4) anhand der Topologie des digitalen Modells (31) und der Ausrichtung eines Projektionsmittels (5) in Bezug auf das reelle Stück und eine Dämpfung der Lichtintensität der Zonen des berechneten Bilds entsprechend der so erkannten Durchgangszone aufweist.

3. Verfahren (P2) zum Projizieren nach dem vorhergehenden Anspruch, wobei die Modifikation eine Verdunkelung, in dem berechneten Bild, von zusätzlichen digitalen Informationen aufweist.

4. Vorrichtung zum Projizieren (5), auf ein reelles Stück (4), eines Bilds, das anhand eines digitalen Modells (31) berechnet wurde, das auf einem Server (3) für digitale Informationen gespeichert und dem reellen Stück zugeordnet ist, zum Darstellen des reellen Stücks in erweiterter Realität, umfassend:
- ein Modul (2) zum Erfassen eines Bilds des reellen Stücks,
- ein Korrekturmodul, das dafür konfiguriert ist, in Echtzeit einen dem digitalen Modell zugeordneten Bezugspunkt mit einem Bezugspunkt des Erfassungsmoduls und einem Bezugspunkt des reellen Stücks zu korrigieren,
**dadurch gekennzeichnet, dass** sie ein Wiederverarbeitungsmodul aufweist, das dafür konfiguriert ist, das berechnete Bild in Abhängigkeit der Topologie des digitalen Modells und in Abhängigkeit der Ausrichtung des Projektionsmittels in Bezug auf das reelle Stück zu korrigieren,
wobei das Wiederverarbeitungsmodul ferner dafür konfiguriert ist, ein Erkennen einer Zone des digitalen Modells (31), das in Bezug auf eine Bezugsebene (44) senkrecht zu der Achse in die Tiefe versetzt ist, die durch den Brennpunkt des Projektors und das Baryzentrum des reellen Stücks (4) hindurchgeht, und ein Modifizieren des berechneten Bilds in den der Zone entsprechenden Teilen aufzuweisen,
wobei das Modifizieren ein digitales Korrigieren zum Ausgleichen des Versatzes zwischen der Projektionsfläche und der Bezugsebene zu den Pixeln der Zonen aufweist,
wobei die Korrektur ein Erzeugen einer Fehlermatrix, die durch die Differenz zwischen einer Matrix, die anhand des Bilds, das anhand des reellen Stücks erlangt wurde, berechnet wird, und einer Bezugsmatrix gebildet wird, die der Topologie des digitalen Modells entspricht, das im gleichen Bezugssystem neu positioniert wurde, dann ein Erzeugen eines Fehlerkriteriums und eine Modifikation der Zellen der Bezugsmatrix des zu projizierenden Bilds bei der Anpassung aufweist, um die Fehlermatrix und/oder ein Skalarmaß von dieser zu minimieren.

5. Projektionssystem (1), aufweisend:
- eine Kamera (2),
- einen Server (3) für digitale Informationen, aufweisend ein digitales Modell (31),
- ein reelles Stück (4), das dem digitalen Modell zugeordnet ist,
- eine Projektionsvorrichtung (5) nach dem vorhergehenden Anspruch.

6. Projektionssystem (1) nach einem der vorhergehenden Systemansprüche, wobei das Wiederverarbeitungsmodul dafür konfiguriert ist, den Schritt des Wiederverarbeitens nach einem der vorhergehenden Ansprüche für das Projektionsverfahren zu implementieren.

7. Computerprogrammprodukt, das direkt in den internen Speicher eines Computers ladbar ist, umfassend Softwarecode-Abschnitte zum Ausführen der Schritte des Verfahrens nach einem der vorhergehenden Ansprüche, wenn das Programm auf einem Computer ausgeführt wird.

## Claims

1. A computer-implemented method (P1, P2) for projecting onto a real workpiece (4) an image calculated from a digital mockup (31) recorded on a digital information server (3) associated with said real workpiece, for the viewing of said workpiece under augmented reality, comprising the following steps:
- capture, by a camera, of the image of the real workpiece,
- real-time adjustment of the reference frame associated with said digital mockup with the reference frame of the video capture system and the reference frame of the real workpiece,
**characterised in that** it contains a step of reprocessing of said image calculated depending on the topology of said digital mockup and depending on the orientation of the projection means with respect to said real workpiece,
wherein the reprocessing step contains detection of a zone of the digital mockup (31) that is offset in depth with respect to a reference plane (44) perpendicular to the axis passing through the focal point of the projector and the barycenter of the real workpiece (4), and modification of the calculated image in the portions corresponding to said zone,
wherein the modification contains a digital correction to compensate for the offset between the projection surface and said reference plane to the pixels of said zones,
wherein the correction contains production of an error matrix, formed by the difference between a matrix calculated on the basis of the image acquired from the real workpiece, and a reference matrix corresponding to the topology of the digital mockup repositioned in the same referential, then production of an error criterion and modification of the cells of the reference matrix of the image to be projected that is in the process of being adapted, so as to minimise the error matrix and/or a scalar measure thereof.

2. The projection method (P1) according to the preceding claim, wherein the reprocessing step contains detection of a through-zone (41, 42) of the real object (4), based on the topology of the digital mockup (31) and on the orientation of a projection means (5) with respect to said real workpiece, and attenuation of the light intensity of the zones of said calculated image corresponding to the through-zone thus detected.

3. The projection method (P2) according to the preceding claim, wherein the modification contains a step of blacking out, in the calculated image, additional digital information.

4. A projection device (5) for projecting onto a real workpiece (4) an image calculated from a digital mockup (31) recorded on a digital information server (3) and associated with said real workpiece, for the viewing of said workpiece under augmented reality, comprising:
- an image capture module (2) of the real workpiece,
- an adjustment module configured to adjust, in real-time, a reference frame associated with said digital mockup with a reference frame of the capture module and a reference frame of the real workpiece,
**characterised in that** it contains a reprocessing module configured to reprocess said calculated image depending on the topology of said digital mockup and depending on the orientation of the projection means with respect to said real workpiece,
the reprocessing module being further configured to contain detection of a zone of the digital mockup (31) that is offset in depth with respect to a reference plane (44) perpendicular to the axis passing through the focal point of the projector and the barycenter of the real workpiece (4), and modification of the calculated image in the portions corresponding to said zone,
wherein the modification contains a digital correction to compensate for the offset between the projection surface and said reference plane to the pixels of said zones,
wherein the correction contains production of an error matrix, formed by the difference between a matrix calculated on the basis of the image acquired from the real workpiece, and a reference matrix corresponding to the topology of the digital mockup repositioned in the same referential, then production of an error criterion and modification of the cells of the reference matrix of the image to be projected that is in the process of being adapted, so as to minimise the error matrix and/or a scalar measure thereof.

5. A projection system (1), containing:
- a camera (2),
- a digital information server (3) containing a digital mockup (31),
- a real workpiece (4) associated with the digital mockup,
- a projection device (5) according to the preceding claim.

6. The projection system (1) according to any one of the preceding system claims, wherein the reprocessing module is configured to implement the reprocessing step according to any one of the preceding projection method claims.

7. A computer program product which can be directly loaded into the internal memory of a computer, comprising software code portions for executing the steps of the method according to any one of the preceding claims, when said program is executed on a computer.
